Europäisches Patentamt

European Patent Office

Office européen des brevets

(19)

(11) Publication number: **0 000 177**
**B1**

(12) **EUROPEAN PATENT SPECIFICATION**

(45) Date of publication of patent specification: **30.09.81**

(21) Application number: **78100210.0**

(22) Date of filing: **21.06.78**

(51) Int. Cl.³: **B 22 D 11/06,**
**B 23 K 35/40, B 21 C 23/00**

(54) Continuous casting methods and apparatus.

(30) Priority: **27.06.77 US 810457**
**05.05.78 US 903347**

(43) Date of publication of application:
**10.01.79 Bulletin 79/1**

(45) Publication of the grant of the European patent:
**30.09.81 Bulletin 81/39**

(84) Designated Contracting States:
**DE FR GB SE**

(56) References cited:
**DE - C - 21 260**
**FR - A - 1 093 733**
**GB - A - 712 690**
**GB - A - 181 338**
**US - A - 3 575 231**

(73) Proprietor: **Western Electric Company,
Incorporated
222 Broadway
New York N.Y. 10038 (US)**

(72) Inventor: **Fuchs, Francis Joseph, Jr.
9 University Way
Princeton Junction New Jersey 08550 (US)**

(74) Representative: **Blumbach, Paul Günter, Dipl.-Ing.
et al,
BLUMBACH WESER BERGEN KRAMER ZWIRNER
HOFFMANN Patentanwälte in München und
Wiesbaden Sonnenberger Strasse 43
D-6200 Wiesbaden 1 (DE)**

Courier Press, Leamington Spa, England.

Continuous casting method and apparatus

The invention relates to a method and apparatus for more continuously casting a molten material, such as metal, and, more particularly, to a method and apparatus for continuously casting a molten material, such as a metal, in which a rotary member, having a groove in one of its surfaces, is utilized.

In the art of continuously casting molten materials, such as metals, it is known to provide a rotary member, which includes a groove in a circumferentially extending surface thereof. A portion of the circumferential groove is enclosed, typically by a portion of a movable band, which surrounds the circumference of the rotary member, while contacting the circumference of the rotary member only along the enclosed groove portion. A molten material is introduced into the groove in the rotary member in the vicinity of the enclosed portion of the groove, and is transported through the enclosed portion of the groove due to the rotation of the rotary member and the simultaneous movement of the band in a like direction. The molten material cools into a solidified condition within the enclosed portion of the groove, and is discharged from the groove upon exiting from the enclosed portion of the groove. Typical of such a continuous casting technique are the methods and aparatus disclosed in US—A— 2,710,433, 2,865,067, 2,928,148, 3,284,859, 3,318,369 and 3,528,479.

From GB—A— 712,690 there is prior known a method and apparatus for continuously casting a molten material comprising at a feeding station introducing the molten material into a groove in a first surface constituting a surface of a first rotary member, enclosing a portion of the molten material in the groove within a second surface constituting a surface of a second rotary member, the first and second rotary members defining a cooling region therebetween at the enclosed portion of the groove, continually applying and removing cooling medium internally to at least one of the first and second rotary members to remove heat from the member in the vicinity of the cooling region at a rate to solidify the molten material, and rotating the first and second members to transport the molten material from the feeding station through the cooling region and discharging solidified material from the groove at a discharging station.

The prior known techniques of continuously casting a molten material within a circumferential groove in a rotary member, partially enclosed by a movable band or a circumferential surface of a second rotary member, as exemplified by the previously mentioned patent specifications, is effective to provide a continuous, solidified product. However, such techniques are limited in capacity by the geometry of the apparatus utilized, due to the fact that circumferential grooves are used, which make it difficult to enclose the molten material securely and long enough for cooling and solidifying the molten material, so that the casting speed and capacity is limited. The claimed invention is intended to remedy these drawbacks. It solves the problem of how to improve a method and design apparatus for continuously casting a molten material in such a manner that the molten material is cooled and solidified in a reliable and quick manner without coming into contact with the coolant and thus avoiding the risk of uncontrolled intrusion of the coolant either as a liquid or gas.

Summary of the Invention

According to the invention the method of continuously casting a molten material is characterized by rotating the first and second surfaces comprising two radially extending surfaces with offset axes of rotation, such that solidified material is gripped along a length of the groove between the first and second radially extending surfaces and transported to the discharging station of the groove. The apparatus claimed for continuously casting molten material is characterized by a die disposed adjacent to the discharging station so as to receive the solidified material discharged from the groove, the die having an aperture shaped in conformity with a desired cross-sectional configuration.

Thus the groove constitutes an angular groove, located in a radially extending, rather than a circumferential, first surface of the rotary member, and is partly enclosed by the second surface of the second rotary member.

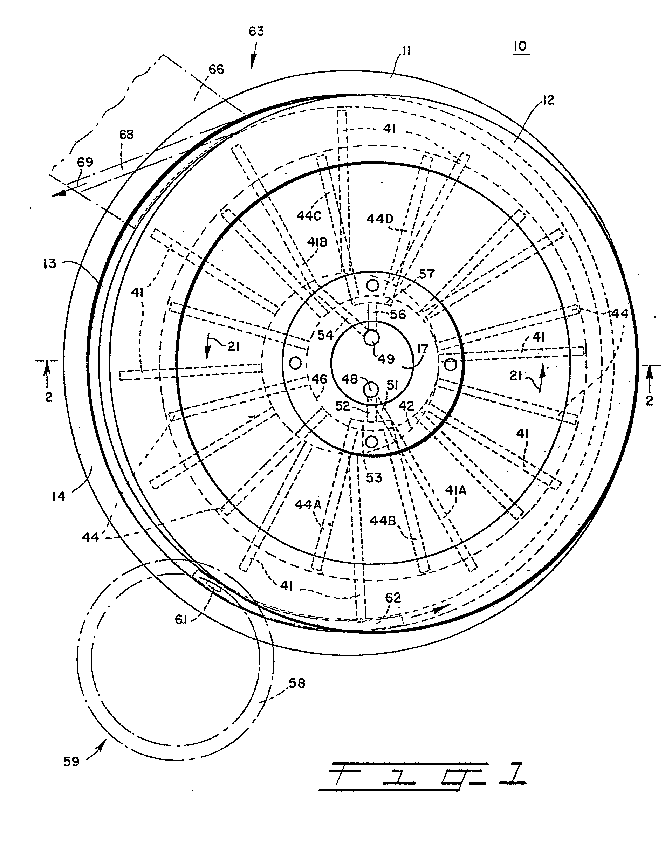

FIG. 1 of the drawing is a plan view of a first embodiment of a continuous casting apparatus, constructed in accordance with the principles of the invention, such first embodiment including a pair of rotary members which define between them a cooling region, a mechanism for feeding a molten material into an annular groove in a radially extending surface of a lower one of the two rotary members, and a mechanism for discharging the material from the annular groove in solidified condition after rotation of the two rotary members has transported the material through the cooling region;

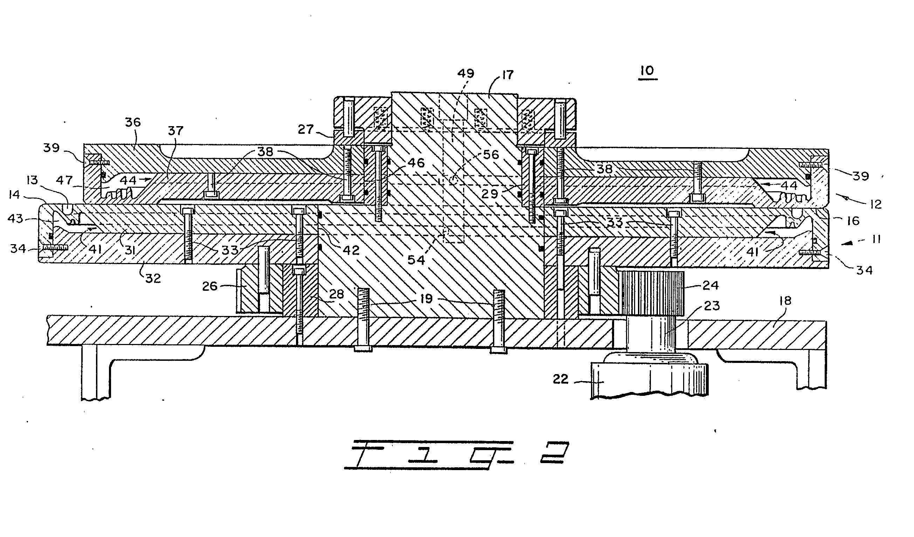

FIG. 2 is an enlarged, vertical, sectional view of the apparatus shown in FIG. 1, taken along the line 2—2 in FIG. 1, illustrating additional aspects of such apparatus, including a mechanism for rotating the the two rotary members, and portions of a fluid circulation system for cooling the two rotary members internally;

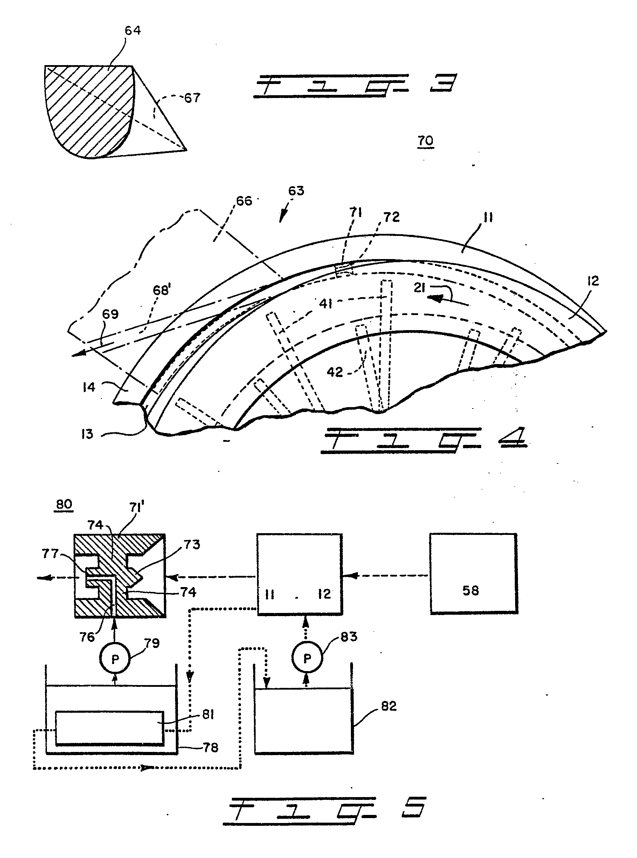

FIG. 3 is an enlarged, vertical sectional view of a scraper mechanism for discharging the solidified material from the annular groove in the lower rotary member, such view being taken along a plane perpendicular to the annular groove looking counter to the direction of rotation of the lower rotary member;

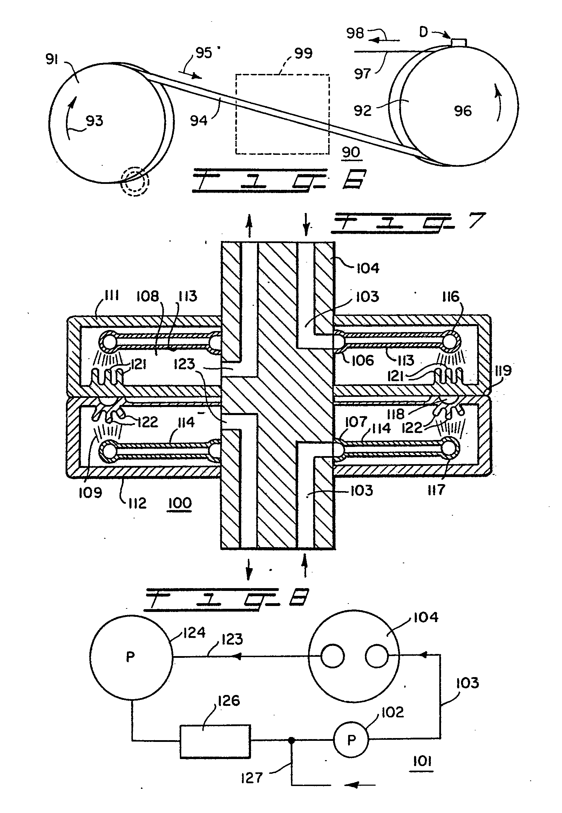

FIG. 4 is a plan view of a portion of the apparatus shown in FIG. 1, so modified as to constitute a second embodiment of the invention, wherein an extrusion die extends into the annular groove in the lower rotary member in order to produce an elongated product of a desired cross-sectional configuration, which configuration is provided by the presence of an aperture of corresponding shape extending through the die;

FIG. 5 is a schematic illustration of a third embodiment of the invention wherein the second embodiment is so modified as to produce a rosin-cored solder product;

FIG. 6 is a schematic illustration of a fourth embodiment of the invention wherein the second embodiment is modified by locating the extrusion die within a separate extrusion mechanism, which extrusion mechanism is fed either directly or through a secondary cooling facility by the elongated product exiting from the apparatus of FIG. 1;

FIG. 7 is a vertical sectional view of a fifth embodiment of the invention wherein a modified, internal cooling arrangement is provided for the two rotary members of the first embodiment, FIG. 7 consisting omitting certain features shown in FIG. 2 in order to better illustrate the modified, internal cooling arrangement; and

FIG. 8 is a schematic illustration of a cooling medium circulating system which may be employed with the fifth embodiment of the invention depicted in FIG. 7.

Detailed Description

Referring initially to FIGS. 1 and 2 of the drawing, a first embodiment 10 of a continuous casting apparatus is shown. The apparatus 10 includes two principal members 11 and 12. A rotary first member 11, which is a lower one of the two members 11 and 12, includes an annular groove 13 in a radially extending, upper, first surface 14. A movable, rotary, second member 12 covers, and thereby encloses, a portion of the annular groove 13 in the first member 11, due to the engagement of a radially extending, lower, second surface 16 (FIG. 2) of the second member 12 with a portion of the radially extending, upper, first surface 14 of the first member 11. The enclosed portion of the annular groove 13 constitutes a cooling region, in which a molten material is to be solidified.

The first and second members 11 and 12 have circular outer peripheries, with the diameter of the first member 11 being greater than that of the second member 12. The two members 11 and 12 are mounted for rotation about a fixed, hub 17, with a substantially vertical axis of the second member 12 offset somewhat from a substantially vertical axis of the first member 11 in order that the second member may cover or enclose only the cooling region portion of the annular groove 13, while leaving another portion of the annular groove 13 unenclosed. The hub 17 is fixed to a housing 18 by conventional means, such as bolts 19,19.

A suitable means for rotating the first member 11 about the hub 17, e.g., in the direction of arrows 21, 21, (FIG. 1) is provided by a fluid or other motor 22 (FIG. 2) with a shaft 23. The shaft 23 projects through the housing 18 to drive pinion 24 which is enmeshed with an annular gear 26 affixed to the first member 11. The second member 12 is adapted to rotate about the hub 17, simultaneously with the rotation of the first member 11, along an offset axis as indicated previously, due to frictional engagement between the members 11 and 12. Such frictional engagement is enhanced by a spring-biased, pressing ring 27. Suitable bearings 28 and 29 are provided, respectively, between the hub 17 and the annular gear 26, and between the hub 17 and the second member 12, in order to permit the described rotation of the two members 11 and 12 about the hub 17.

The first member 11 is composed of two halves 31 and 32, which are joined together by conventional means, such as bolts 33,33 and screws 34,34. Similarly, the second member 12 is composed of two halves 36 and 37, which are joined together by conventional means, such as bolts 38,38 and screws 39,39. A first set of radially extending, internal passageways 41,41, (FIG. 1), separated from one another by 30° angles, joins a radially innermost surface 42 of the first member 11, adjacent to the hub 17, with a first annular chamber 43 (FIG. 2) which is located within the first member 11 between the two halves 31 and 32, beneath the annular groove 13. Similarly, a second set of radially extending, internal passageways 44,44 (FIG. 1), separated from one another by 30° angles, joins a radially innermost surface 46 of the second member 12, adjacent to the bearing 29, with a second annular chamber 47 (FIG. 2) which is located within the second member 12 between the two halves 36 and 37, along a radially outermost portion of the interior of the second member 12.

A cooling fluid inlet passageway 48 (FIG 1) and a cooling fluid discharge passageway 49 extend generally axially through an upper portion of the hub 17. The cooling fluid inlet passageway 48 is coupled via a first connecting passageway 51 through the hub 17 to supply a cooling fluid to the radially innermost surface 42 of the first member 11, and via a second connecting passageway 52 through the hub 17 to supply the cooling fluid to a small, first arcuate distribution chamber 53 within the bearing 29 along the radially innermost surface 46 of the second member 12. Similarly, the cooling fluid discharge passageway 49 is coupled via a third connecting passageway 54 through the hub 17, located approximately 180° about the periphery of the hub 17 from the first connecting passageway 51, to receive the cooling fluid from the radially innermost surface 42 of the first member 11, and via a fourth connecting passageway 56 through the hub 17, located approximately 180° about the periphery of the hub 17 from the second connecting passageway 52, to receive the cooling fluid from a small, second arcuate distribution chamber 57 within the bearing 29 along the radially innermost surface 46 of the second member 12.

The arrangement is such that a cooling fluid may be circulated through one interior of both the first member 11 and the second member 12 upon the simultaneous rotation of the two members 11 and 12. In particular, circulation within the first member 11 will take place via the cooling fluid inlet passageway 48; the first connecting passageway 51; each successive radially extending passageway 41 as it moves past the first connecting passage 51, e.g., the radially extending passageway 41A in FIG. 1; the first annular chamber 43; each successive radially extending passageway 41 as it moves past the third connecting passageway 54, e.g., the radially extending passageway 41B in FIG. 1 the third connecting passageway 54; and the cooling fluid discharge passageway 49. The circulation of the cooling fluid through the interior of the second member 12 will occur via the cooling fluid inlet passageway 48; the second connecting passageway 52; the first arcuate distribution chamber 53; each successive radially extending passageway 44 as it moves past the first arcuate distribution chamber 53, e.g., the radially extending passageways 44A and 44B in FIG. 1; the second annular chamber 47; each successive radially extending passageway 44 as it moves past the second arcuate distribution chamber 57, e.g., the radially extending passageways 44C and 44D in FIG. 1; the second arcuate distribution chamber 57; the fourth connecting passageway 56; and the cooling fluid discharge passageway 49. The cooling fluid inlet and discharge passageways 48 and 49 are, of course, connected, respectively, to a conventional source of a cooling fluid under pressure, such as a pump, and a conventional receptacle for the cooling fluid, such as a sump (neither of which is shown in relation to this first embodiment of the invention, but each of which may be of the respective type illustrated schematically in FIG. 5 of the drawing for a third embodiment of the invention hereinafter to be described).

A tundish 58 (FIG. 1) is positioned above the first member 11 at a feeding station 59. The tundish 58 is of a conventional type, and includes a bottom opening 61 and a curved tube 62 for feeding a molten material, e.g., a molten metal such as copper, aluminum or solder, into the annular groove 13 in the radially extending, upper surface 14 of the first member 11. Alternatively, where visual monitoring of the level of the molten metal in the annular groove 13 is desired, the curved tube 62 may be moved away somewhat from the annular groove 13, in which case a dam for the molten metal, along an upstream portion of the annular groove 13, may be appropriate. The feeding station 59 is so located that the molten material will be fed into the annular groove 13 in the vicinity of the entry of the annular groove 13 into the cooling region beneath the second member 12, as the two members 11 and 12 rotate in the direction of arrows 21,21.

A discharging station 63 (FIG. 1) is located along the first member 11, in the vicinity of the position at which the annular groove 13 emerges from the cooling region beneath the second member 12. Mounted at the discharging station 63 are a scraper 64 (FIG. 3) and a support 66 (FIG. 1) for the scraper 64. The scraper 64 constitutes a curved blade, extending into the annular groove 13 in the first member 11 and back into the cooling region. A ramp provided by an upper surface 67 of the scraper 64 is so disposed as to scrape and discharge solidified material 68 from the annular groove 13 as the solidified material 68 is transported from the cooling region due to further rotation of the first member 11.

The operation of the apparatus 10 of FIGS. 1—3 of the drawing will next be described. In an initial condition of the apparatus 10, the motor 22 (FIG. 2) is operating to drive the first member 11 in the direction of arrows 21,21 (FIG. 1) through the shaft 23 (FIG. 2) the pinion 24 and the annular gear 26. Frictional engagement between the two members 11 and 12, under the urging of the pressing ring 27, causes the second member 12 also to rotate in the direction of arrows 21,21. An adequate supply of molten material is currently present in, and may be continually introduced in conventional manner into, the tundish 58 (FIG. 1) at the feeding station 59. A pressurized cooling fluid is circulating through the interiors of the two members 11 and 12 along the previously described circulation paths.

The molten material is now caused, in conventional manner, to flow through the opening 61 and the curved tube 62 so as to enter into the annular groove 13 in the radially extending, upper surface 14 of the first member 11. The molten material is transported within the annular groove 13 through the cooling region beneath the lower surface 16 (FIG. 2) of the second member 12 due to the rotation of the first member 11.

As the pressurized cooling fluid flows through the annular chambers 43 and 47 (FIG. 2) in the respective members 11 and 12, the fluid continuously receives heat from the cooling region, thereby cooling, and causing solidification of, the advancing molten material within the annular groove 13. Each of the two internally cooled members 11 and 12 contributes substantially to such cooling of the molten metal.

Continuing rotation of the first member 11, with the simultaneous rotation of the second member 12, next transports the solidified material 68 (FIG. 1) into the discharging station 63. The ramp provided by the upper surface 67 (FIG. 3) of the scraper 64, which extends into the annular groove 13 in the first member 11, is engaged by the solidified material 68. Thus, the solidified material 68 is scraped and discharged from the annular groove 13 in continuous manner, and advances continuously, tangentially to the annular groove 13, in the direction of arrow 69, toward conventional take-up or collection facilities (not shown).

Referring next to FIG. 4 of the drawing, a portion of a second embodiment 70 of the continuous casting apparatus is illustrated. The second embodiment 70 is substantially similar to the first embodiment 10, but differs from the first embodiment 10 in that the second embodiment 70 is effective to form an elongated product 68', having a desired cross-sectional configuration, from the molten material initially fed from the tundish 58 (FIG. 1) into the annular groove 13 in the radially extending, upper surface 14 of the first member 11.

The second embodiment 70 (FIG. 4) includes an extrusion die 71 located in the vincinity of the discharging station 63, extending somewhat into the enclosed, cooling region of the annular groove 13. The die 71 has an aperture 72 extending longitudinally through its body. The shape of the die aperture 72 corresponds to the desired cross-sectional configuration of the elongated product 68'. A ramp similar to that provided by the upper surface 67 of the scraper 64 (FIG. 3) of the first embodiment 10, forms an entry end of the die 71. Such ramp serves to scrape the solidified material 68 from the annular groove 13 and into the die aperture 72 upon rotation of the first rotary member 11 in the direction of arrow 21.

The operation of the second embodiment 70 is identical to that of the first embodiment 10 up to the solidification of the material 68 within the annular groove 13 in the cooling region beneath the lower surface 16 of the second member 12. The solidified material 68 then encounters the ramp and advances into the die aperture 72. Continuing rotation of the two members 11 and 12 thereupon causes the solidified material 68 to be extruded through the die aperture 72, and to be discharged in continuous manner from the annular groove 13 at the discharging station 63 as the elongated product 68' of desired cross-sectional configuration.

Turning now to FIG. 5 of the drawing, a third embodiment 80 of the continuous casting apparatus is illustrated schematically. The third embodiment is substantially similar to the second embodiment 70, but differs from the second embodiment 70 in that the third embodiment 80 is effective to produce an elongated product 68' of a particular type, namely, a rosin-cored solder.

The third embodiment 80 substitutes for the extrusion die 71 of the second embodiment 70, an extrusion die 71' which includes a mandrel 73, supported by one or more webs 74,74. A passageway 76, which extends through one of the webs 74,74 to a downstream end 77 of the mandrel 73, is adapted to conduct molten rosin from a first reservoir 78 to the mandrel end 77. A pump 79 is utilized for feeding the rosin to the passageway 76 from the first reservoir 78 following the path indicated by the solid lines and arrows in FIG. 5. In order that feeding of the rosin may take place smoothly and continuously from the first reservoir 78, through the pump 79 and then through the passageway 76, the rosin must be maintained in molten condition, at an elevated temperature, e.g., 79.4 C.

A heat exchanger 81 is located in the rosin reservoir 78. A cooling fluid is maintained in a second reservoir or sump 82 and is circulated through the interiors of the members 11 and 12 by a pump 83 in similar manner to the circulation of cooling fluid discussed previously with respect to the embodiments 10 and 70. Such cooling fluid, of course, receives heat from the members 11 and 12 while cooling such members. The cooling fluid, and the design of the cooling system, are preferably so interrelated that the cooling fluid, e.g., water, exits from the members 11 and 12 at a temperature, e.g., 93.3°C., somewhat in excess of that required to keep the rosin molten. The heated cooling fluid is conducted to the heat exchanger 81 from the members 11 and 12, and serves to give up sufficient heat within the heat exchanger 81 to maintain the rosin at its requried temperature. Thus, the rosin is advantageously heated as the cooling fluid is advantageously cooled, prior to the recirculation of the cooling fluid through the second reservoir or sump 82 and the pump 83 to the two members 11 and 12. The path taken by the cooling fluid is indicated by the dotted lines and arrows in FIG. 5.

The operation of the third embodiment 80 is identical to that of the second embodiment 70 up to the entry of the material 68 into the region of the die 71'. Such material 68 is solder in the case of the third embodiment 80. The solder material, which follows the dash line and arrow path in the schematic illustration provided by FIG. 5, has been fed in molten form from the tundish 58 into the annular groove 13 in the first member 11, has been transported through substantially the entirety of the cooling region beneath the second member 12, and is now reaching the die 71' of the third embodiment 80 as solidified solder 68. As the solidified solder 68 encounters the mandrel 73, it is deformed into tubular shape, and is then filled with molten rosin issuing from the passageway 76 at the downstream end 77 of the mandrel 73. As this desired rosin-cored solder product is being formed, in continuous manner, the cooling fluid is continuously being circulated through the interiors of the two members 11 and 12, with the molten solder in the cooling region of the annular groove 13 giving up heat to the cooling fluid. The heated cooling fluid is continuously being circulated through the heat exchanger 81, giving up heat to the rosin in the reservoir 78 in order to maintain the rosin molten and, thus, in flowable condition.

Referring next to FIG. 6 of the drawing, a fourth embodiment 90 of the continuous casting apparatus is illustrated schematically. The fourth embodiment 90 incorporates both casting and extrusion facilities in similar manner to the second embodiment 70 of FIG. 4. The fourth embodiment 90 (FIG. 6), however, employs both a casting mechanism 91 and a separate extrusion mechanism 92 displaced somewhat from the casting mechanism 91. The casting mechanism 91 may be the first embodiment 10 shown in FIGS 1 and 2 of the drawing, while the extrusion mechanism 92 is preferably of the type disclosed in United Kingdom Application No. 6873/77. Such two mechanisms are particularly well adapted to function together in that the cross-sectional shape of the solidified material 68 discharged from the first embodiment 10, i.e., the shape of the annular groove 13 which may be seen in FIG. 2, is precisely the shape desired for rod which is to be acted upon by the extrusion mechanism disclosed in the cited United Kingdom patent application.

In the operation of the fourth embodiment 90, the casting mechanism 91 is operated in the manner previously described with respect to the first embodiment 10. Rotation of the casting mechanism 91 in the direction of arrow 93 causes a solidified material 94, e.g., cast bar or rod, to be discharged from the casting mechanism 91 toward the extrusion mechanism 92 in the direction of arrow 95. The solidified material 94 passes into the extrusion mechanism 92 while still quite hot, and may readily be extruded through a die D upon rotation of the extrusion mechanism in the direction of arrow 96. Thus, an extruded product 97, e.g., metallic wire or rosin-cored solder, exits from the extrusion mechanism 92 in the direction of arrow 93, e.g., toward suitable take-up facilities (not shown). The extruded product 97 has a cross-sectional configuration which corresponds to the shape of an aperture in the die D. An optional, secondary cooling facility 99 may be located at a cooling station between the casting mechanism 91 and the extrusion mechanism 92 in the path of the advancing, solidified material 94. Such a secondary cooling facility 99 may be advantageous in lowering the temperature of the solidified material 94, where a high melting point material, e.g., copper or steel, is involved, to a temperature better suited to producing an extruded product 97 with desired physical properties. Thus, a core region of the solidified material 94 may still be molten upon entry into the secondary cooling facility 99, with solidification of the core region occurring during secondary cooling in order to provide an extruded product 97 of improved grain structure. Such secondary cooling may also be useful where some other facility, e.g., a hot rolling mill, is to replace the extrusion mechanism 92 downstream of the cooling station.

Turning now to FIG. 7 of the drawing, a fifth embodiment 100 of the continuous casting apparatus is illustrated. The fifth embodiment is substantially similar in most respects to the first embodiment 10, which has already been described. Accordingly, only the significant differences between the two embodiments 10 and 100 will be discussed.

The fifth embodiment 100 includes a modified, internal cooling arrangement which operates in conjunction with a cooling medium circulatign system 101 shown in FIG. 8 of the drawing. The system 101 includes a pump 102 for supplying an inlet line 103 with a cooling medium, e.g., water, at high pressure. The inlet line 103 passes through a central hub 104 (FIG. 7), and serves to feed the cooling medium to two annular inlet tubes 106 and 107 which surround the hub 104 at spaced locations along the hub 104. Each inlet tube 106 or 107 is mounted within the hollow interior 108 or 109 of a different one of two rotary members 111 and 112. The rotary members 111 and 112, which correspond to the rotary members 11 and 12 of the first embodiment 10 (FIG. 2), are mounted for rotation about the hub 104 (FIG. 7). For convenience of illustration, size differences between the rotary members 111 and 112, an offset between the axes of rotation of the rotary members 111 and 112, and the exact configuration of the hub 104 required to compensate for such size differences and axial offset, have been omitted from FIG. 7, since such features are already shown in FIG. 2 of the drawing.

The annular inlet tubes 106 and 107, into which inlet line 103 opens, are rotatable with the respective rotary members 111 and 112. Each inlet tube 106 or 107 is connected to feed the cooling medium at high pressure through a set of radially extending tubes 113,113 or 114,114 to a circumferential cooling jet tube 116 or 117. Each of the cooling jet tubes 116 and 117 includes a large number of small holes along a surface of the cooling jet tube 116 or 117 which faces the location of an annular casting groove 118 in a surface 119 of rotary member 112. The arrangement is such that high velocity cooling jets will be formed by the high pressure cooling medium issuing through the small holes in the cooling jet tubes 116 and 117, providing a very substantial cooling effect upon the rotary members 111 and 112 in the vicinity of the annular groove 118. Advantageously, cooling fins 121 and 122 may be provided within the respective rotary members 111 and 112 along the locations toward which the high velocity coolant jets will be directed. Additional cooling effects may also be achieved due to conduction of heat away from the vicinity of the annular groove 118 within the walls of the rotary members 111 and 112 remote from the engaging surfaces of the rotary members 111 and 112.

An exhaust line 123 leads from a number of locations on the central hub 104 to a high volume, vacuum pump 124 (FIG. 8). The vacuum pump 124, which serves remove all cooling medium vapors from the respective interiors 108 and 109 of the rotary members 111 and 112, as well as any cooling medium still in a liquid condition, may be, e.g., either a turbine or a centrifugal type pump. The reduced vapor pressure within the interiors 108 and 109 of the respective rotary members 111 and 112 will increase the evaporation rate of the cooling medium, and will thereby improve the cooling rate. The cooling medium vapors, together with any liquid cooling medium, will pass from the vacuum pump 124 through a condenser 126, and will then be returned to the inlet line 103, in liquid condition, by the pump 102.

The cooling arrangement provided by the fifth embodiment 100 and the cooling medium circulating system 101, as described, constitutes a closed system. High velocity jet cooling capability is provided with substantially no loss of water or other cooling medium from the closed interiors 108 and 109 of the respective rotary members 111 and 112, and, thus, no splattering and/or steam control facilties are required. A make-up cooling medium, inlet line 127 may, however, be provided for occasional addition or replacement of cooling medium lost, e.g., due to leakage.

The fifth embodiment 100 operates in similar manner to the first embodiment 10, forming a cast, elongated product from a molten material such as aluminum, copper or steel, for which type of material the high capacity cooling system of the fifth embodiment 100 is particularly well suited. With water or other cooling medium being pumped at high pressure from the pump 102 through the inlet line 103, the annular inlet tubes 106 and 107, the radially extending tubes 113,113 and 114,114, and the circumferential cooling jet tubes 116 and 117, massive quantities of the cooling medium may be sprayed onto the fins 121 and 122 within the respective rotary members 111 and 112 in the vicinity of the annular casting groove 118, removing large quantities of heat from about the groove 118. The jet action serves to penetrate any layer of steam or other vapor adjacent to the fins 121 and 122. The vacuum pump 124 meanwhile exhausts cooling medium vapors, as well as any liquid cooling medium, from the interiors 108 and 109 of the respective rotary members 111 and 112, while lowering the vapor pressure within the rotary members 111 and 112 so as to enhance evaporation cooling. The cooling medium vapors and liquid cooling medium pass through the exhaust line 123 and the vacuum pump 124 into the condenser 126, from which liquid cooling medium is returned to the pump 102 and the inlet line 103.

It is to be understood that the described embodiments are simply illustrative of the apparatus and methods of the invention. Many modifications may, of course, be made in accordance with the principles of the invention.

## Claims

1. Method of continuously casting a molten material, comprising at a feeding station (59) introducing the molten material into a groove (13) in a first surface (14) constituting a surface of a first rotary member (11), enclosing a portion of the molten material in the groove (13), with a second surface (16) constituting a surface of a second rotary member (12), the first and second rotary members (11, 12) defining a cooling region there-between at the enclosed portion of the groove (13), continually applying and removing cooling medium internally to at least one of the first and second rotary members (11, 12) to remove heat from the member in the vicinity of cooling region at a rate to solidify the molten material, rotating the first and second members (11, 12) to transport the molten material from the feeding station (59) through the cooling region and discharging solidified material from the groove (13) at a discharging station (63), characterized by rotating the first and second surfaces (14, 16) comprising two radially extending surfaces with offset axes of rotation such that solidified material is gripped along a length of the groove (13) between the first and second radially extending surfaces and transported to the discharging station (63) of the groove.

2. Method according to claim 1, characterized in that the molten material is molten solder, the solidified solder is passed through a die aperture (72) which is configured to form an elongated tube of solidified solder (68'), the heated cooling medium (82) is applied to a rosin material (78) so as to remove heat from the cooling medium and to maintain the rosin material in a molten condition, and the molten rosin material is introduced into the interior of the tube of solidified solder in the vicinity of the die (71').

3. Apparatus for continuously casting molten material according to the method as claimed in claim 1, comprising a first rotary member (11) having a groove (13) in a first surface (14) thereof, a second rotary (12) member having a second surface (16) disposed adjacent to the first surface (14) of the first rotary member (11) to enclose a portion of the groove (13), thereby defining a cooling region between the first and second rotary members (11, 12) at the enclosed portion of the groove, means (58, 61, 62), disposed at a feeding station (59) for introducing molten material into the groove, means (48, 51 to 54, 56, 57) for continually applying and replacing a cooling medium internally of at least one of the first and second rotary members (11, 12) to remove heat during rotation of the members at a rate to solidify the molten material prior to discharge, and means (22, 24, 26) for rotating about offset axes the first and second members (11, 12) simultaneously, in such direction as to transport the molten material from the feeding station (59), within the groove (13), through the cooling region and into a discharging station (63), characterized by a die (71, 71') disposed adjacent to the discharging station (63) so as to receive the solidified material discharged from the groove (13), the die having an aperture (72) shaped in conformity with a desired cross-sectional configuration.

4. Apparatus according to claim 3, characterized by the elongated product being e.g. rosin-cored solder, the molten material being e.g. molten solder, and the die aperture being so configured as to form an elongated tube of e.g. solidified solder, means (81) for applying the heated cooling medium (82) to a second material e.g. rosin (78) to remove heat from the cooling medium while maintaining the second material in a molten condition, and means (76, 77), located in the vicinity of the die (71'), for introducing the molten second material into the interior of the tube of e.g. solidified solder.

5. Apparatus according to claim 3 or 4, characterized by means (Fig. 6: 99) following the two rotary members (91) for cooling the solidified material externally of the groove.

**Patentansprüche**

1. Verfahren zum kontinuierlichen Gießen eines geschmolzenen Materials mit den Schritten: an einer Zuführstation (59) wird das geschmolzene Material in eine Rinne (13) in einer ersten Fläche (14) eingeführt, die eine Fläche eines ersten rotierenden Teils (11) bildet, Einschließen eines Teils des geschmolzenen Materials in der Rinne (13) durch eine zweite Fläche (16), die eine Fläche eines zweiten rotierenden Teils (12) bildet, das erste und das zweite rotierende Teil (11, 12) definieren zwischen sich eine Kühlzone am eingeschlossenen Teil der Rinne (13), kontinuierliches Zuführen und Abführen eines Kühlmittels zu bzw. von wenigstens einem des ersten und zweiten rotierenden Teils (11, 12), um Wärme von dem Teil in der Nähe der Kühlzone in einer solchen Menge abzuführen, daß das geschmolzene Material fest wird, Drehen des ersten und zweiten Teils (11, 12), derart, daß das geschmolzene Material von der Zuführstation (59) durch die Kühlzone geführt und das festgewordene Material an einer Entnahmestation (63) aus der Rinne (13) entnommen werden, dadurch gekennzeichnet, daß die erste und die zweite Fläche (14, 16) gedreht werden und zwei sich radial erstreckende Flächen mit gegeneinander versetzten Drehachsen bilden, derart, daß das verfestigte Material auf einer Länge der Rinne (13) zwischen der ersten und zweiten, sich radial erstreckenden Fläche erfaßt und zur Entnahmestation (63) der Rinne transportiert wird.

2. Verfahren nach Anspruch 1, dadurch gekennzeichnet, daß das geschmolzene Material geschmolzenes Lötmetall ist, daß das verfestigte, Lötmetall durch eine Ziehsteinöffnung (72) geführt wird, die so ausgebildet ist, daß ein längliches Rohr aus verfestigtem Lötmetall (68') entsteht, daß das erwärmte Kühlmittel (82) einem Kolophoniummaterial (78) zugeführt wird, um Wärme vom Kühlmittel abzuführen und das Kolophoniummaterial im geschmolzenen Zustand zu halten, und daß das geschmolzene Kolophoniummaterial in das Innere des Rohres aus verfestigtem Lötmetall in der Nähe des Ziehsteins (71') eingeführt wird.

3. Vorrichtung zum kontinuierlichen Gießen eines geschmolzenen Materials nach dem Verfahren gemäß Anspruch 1, mit: einem ersten rotieren den Teil (11), das eine Rinne (13) in einer ersten Fläche (14) aufweist, mit einem zweiten rotierenden Teil (12), das eine zweite Fläche (16) nahe der ersten Fläche (14) des ersten rotierenden Teils (11) besitzt, um einen Teil der Rinne (13) einzuschließen und dadurch eine Kühlzone zwischen dem ersten und zweiten rotierenden Teil (11, 12) am eingeschlossenen Teil der Rinne zu definieren, mit einer an einer Zuführstation (59) angeordneten Einrichtung (58, 61, 62) zur Einführung von geschmolzenem Material in die Rinne, mit einer Einrichtung (48, 51—54, 56, 57) zum kontinuierlichen Zuführen und Ersetzen eines Kühlmittels im Inneren wenigstens eines des ersten und zweiten rotierenden Teils (11, 12), um Wärme bei der Drehung der Teile in einer solchen Menge abzuführen, daß das geschmolzene Material vor der Entnahme verfestigt wird, und mit einer Einrichtung (22, 24, 26) zum gleichzeitigen Drehen des ersten und zweiten Teils (11, 12) um gegeneinander versetzte Achsen in einer solchen Richtung, daß das geschmolzene Material von der Zuführstation (59) in der Rinne (13) durch die Kühlzone in eine Entnahmestation (63) transportiert wird, gekennzeichnet dadurch: einen Ziehstein (71, 71'), der in der Nähe der Entnahmestation (63) so angeordnet ist, daß er das aus der Rinne (13) entnommene, verfestigte Material aufnimmt, und der eine Öffnung (72) aufweist, die entsprechend einer gewünschten Querschnittsform ausgebildet ist.

4. Vorrichtung nach Anspruch 3, dadurch gekennzeichnet, daß das längliche Produkt beispielsweise Lömetall mit einem Kolophoniumkern ist, daß das geschmolzene Material beispielsweise geschmolzenes Lötmetall ist und daß die Ziehstein-öffnung so ausgebildet ist, daß eine längliches Rohr aus beispielsweise verfestigtem Lötmetall gebildet wird, daß eine Einrichtung (81) vorgesehen ist, um das erwärmte Kühlmittel (82) einem zweiten Material, beispielsweise Kolophonium (78), zuzuführen und Wärme vom Kühlmittel abzuführen, während das zweite Material im geschmolzenen Zustand gehalten wird, und daß ferner eine Einrichtung (76, 77) in der Nähe des Ziehsteins (71') vorgesehen ist, um das geschmolzene zweite Material in das Innere des Rohres aus beispielsweise verfestigtem Lötmetall einzuführen.

5. Vorrichtung nach Anspruch 3 oder 4, gekennzeichnet durch eine den beiden rotierenden Teilen (91) folgende Einrichtung (Fig. 6: 99), die das verfestigte Material außerhalb der Rinne kühlt.

**Revendications**

1. Procédé de coulée en continu d'un matière fondue, qui consiste: à un poste (59) de chargement à introduire la matière fondue dans une gorge (13) d'une première surface (14) constituant une surface d'un premier élément (11) tournant, à enfermer une portion de la matière fondue dans la gorge (13) par une seconde surface (16) constituant une surface d'un second élément (12) tournant, le premier et le second éléments (11, 12) tournants définissant entre eux une région de refroidissement à la portion enfermée de la gorge (13), à appliquer et à enlever continuellement du fluide de refroidissement à l'intérieur de l'un au moins des premier et second éléments (11, 12) tournants pour enlever de la chaleur de cet élément au voisinage de la région de refroidissement à un débit qui solidifie la matière fondue, à faire tourner le premier et le second éléments (11, 12) pour faire passer la matière fondue du poste (59) de chargement par la région de refroidissement et à décharger la matière solidifiée de la gorge (13) à un poste (63) de déchargement, caractérisé en ce qu'il consiste à faire tourner la première et la seconde surfaces (14, 16) comprenant deux surfaces s'étendant radialement et ayant des axes de rotation déportés de manière à agripper la matière solidifiée suivant une longueur de la gorge (13) entre les première et seconde surfaces s'étendant radialement et à la transporter au poste (63) de déchargement de la gorge.

2. Procédé suivant la revendication 1, caractérisé en ce que la matière fondue est soudure fondue, la soudure solidifiée traversant une ouverture (72) de filière à configuration en forme de tube élancé de soudure (68') soldifiée, le fluide (82) de refroidissement chauffé étant appliqué à une matière (78) en colophane de manière à enlever de la chaleur du fluide de refroidissement et à maintenir la matière en colophane à l'état fondu et à introduire la matière en colophane fondue à l'intérieur du tube de soudure solidifiée au voisinage de la filière (71').

3. Installation de coulée en continu d'une matière suivant le procédé de la revendication 1, comprenant un premier élément (11) tournant ayant une gorge (13) ménagée dans une première surface (14) de celui-ci, un second élément (12) tournant ayant une seconde surface (16) disposée au voisinage de la première surface (14) du premier élément (11) tournant de manière à enfermer une portion de la gorge (13), définissant ainsi une région de refroidissement entre le premier et le second éléments (11, 12) tournants à la portion enfermée de la gorge, des moyens (58, 61, 62) disposés á un poste (59) de chargement pour introduire de la matiére fondue dans la gorge, des moyens (48, 51 à 54, 56, 57) pour envoyer et remplacer continuellement un fluide de refroidissement à l'intérieur de l'un au moins des premier et second éléments (11, 12) tournants afin d'enlever de la chaleur pendant la rotation de ces éléments à un débit tel que la matière fondue se solidifie avant le déchargement, et des moyens (22, 24, 26) pour faire tourner autour d'axes déportés les premier et second éléments (11, 12) simultanément dans une direction telle que la matière fondue passe du poste (59) de chargement dans la gorge (13) en traversant la région de refroidissement et arrive dans un poste (63) de déchargement, et caractérisée par une filière (71, 71') disposée au voisinage du poste (63) de déchargement de maniére à recevoir la matiére solidifiée déchargé de la gorge (13), la filière ayant une ouverture (72) conformée en conformité avec une configuration souhaitée de section droite.

4. Installation suivant la revendication 3, caractérisée en ce que le produit élancé est par exemple une soudure à noyau en colophane, la mantière fondue étant par exemple une soudure fondue et l'ouverture de la filière ayant une configuration telle qu'elle forme un tube élancé, par exemple en soudure solidifiée, et est prévu des moyens (81) pour appliquer le fluide (82) de refroidissement chauffé à une seconde matière (78) par exemple en colophane pour enlever de la chaleur du fluide de refroidissement tout en maintenant la seconde matière à l'état fondu, ainsi que des moyens (76, 77) disposés au voisinage de la filière (71') pour introduire la seconde matière fondue à l'intérieur du tube, par exemple en soudure solidifiée.

5. Installation suivant la revendication 3 ou 4, caractérisée par des moyens (figure 6: 99) à la suite des deux éléments (91) tournants pour refroidir la matière solidifiée à l'extérieur de la gorge.

Fig 1

FIG. 2

FIG. 3

FIG. 4

FIG. 5

FIG-6

FIG-7

FIG-8